(19) Europäisches Patentamt

European Patent Office

Office européen des brevets

(11) Veröffentlichungsnummer: **0 341 379 B1**

(12) **EUROPÄISCHE PATENTSCHRIFT**

(45) Veröffentlichungstag der Patentschrift: **02.12.92**

(21) Anmeldenummer: **89102294.9**

(22) Anmeldetag: **10.02.89**

(51) Int. Cl.⁵: **D06N 5/00**, C08L 95/00

(54) **Dichtungsbahn und Verfahren zu ihrer Herstellung.**

(30) Priorität: **10.05.88 DE 3815915**

(43) Veröffentlichungstag der Anmeldung:
**15.11.89 Patentblatt 89/46**

(45) Bekanntmachung des Hinweises auf die
Patenterteilung:
**02.12.92 Patentblatt 92/49**

(84) Benannte Vertragsstaaten:
**AT BE DE FR GB IT NL**

(56) Entgegenhaltungen:
**EP-A- 0 196 365**
**EP-A- 0 204 157**
**WO-A-88/08866**
**FR-A- 2 464 138**
**US-A- 4 368 228**

(73) Patentinhaber: **RÜTGERSWERKE AKTIENGE-
SELLSCHAFT**
**Mainzer Landstrasse 217**
**W-6000 Frankfurt am Main 1(DE)**

(72) Erfinder: **Sabau, Petru**
**Inheidenerstr. 67**
**W-6000 Frankfurt a. M.(DE)**
Erfinder: **Scherp, Ernst, Dipl.-Ing.**
**Erlenweg 5**
**W-6554 Bruchköbel(DE)**
Erfinder: **Haushofer, Bert, Dipl. rer. pol.**
**Meisenweg 18**
**W-6240 Königstein Ts(DE)**
Erfinder: **Schumacher, Wilfried, Dipl.-Kfm.**
**Hessenstr. 24**
**W-6050 Offenbach(DE)**

EP 0 341 379 B1

## Beschreibung

Die Erfindung betrifft eine Dichtungsbahn für Bauzwecke aus Polymerbitumen und ein Verfahren zu ihrer Herstellung.

Dichtungsbahnen mit und ohne Verstärkungseinlage auf der Basis von mit Polymeren modifizierten Bitumen sind an sich bekannt. Als Polymer werden insbesondere Elastomere und Polyolefine verwendet. In der Praxis haben sich vor allem Dichtungsbahnen mit SBS (Styrol-Butadien-Styrol) oder APP (ataktischem Polypropylen) durchgesetzt. Beide Polymere bewirken eine Erweiterung der Plastizitätsspanne. Mit SBS modifizierte bituminöse Dichtungsbahnen lassen sich z. B. im Gießverfahren mit geblasenem Bitumen verkleben oder selbstklebend ausrüsten, aber sie sind empfindlich gegen UV-Strahlen und müssen daher als äußere Dichtungsbahn mit einer Schutzschicht versehen sein. Mit APP modifizierte bituminöse Bahnen lassen sich weder mit Oxidationsbitumen noch mit Elastomerhaftklebern fixieren.

APP-modifizierte Polymerbahnen besitzen naturgemäß geringere Kälteflexibilitäten. Um dies zu verhindern, wird häufig ein Ethylen-Propylen-Copolymerisat zugesetzt. Die Oberfläche solcher bituminöser Dichtungsbahnen wird jedoch durch das Ausschwitzen von öligen Bestandteilen aus dem Gemisch klebrig, so daß es bei der Lagerung nicht abgestreuter Bahnen zu Verbackungen kommt. Dieses Problem wird auch nicht durch geringfügige Zusätze von isotaktischem Polypropylen (IPP), wie in der US-A 4,368,228 beschrieben, gelöst. Um das Ausschwitzen zu verhindern, wird in der DE-A-19 41 630 vorgeschlagen, der bituminösen Masse bis zu 10 Gew.-% Schwefel zuzusetzen. Bei der Verarbeitung entsteht jedoch $H_2S$, der eine aufwendige Abgasreinigung erforderlich macht.

Die Migration der öligen Bestandteile ist auch ein Grund für die schlechte Verträglichkeit mit Klebebitumen. Ein vollflächiges Verkleben und Verbinden der Überlappungsnähte mit Klebebitumen z. B. nach der Gießmethode ist daher nicht möglich. Wegen der Lösungsmittelempfindlichkeit ist auch die Verwendung von lösungsmittelhaltigen Kaltklebern ausgeschlossen (Vortrag N. A. Hendriks: Verarbeitungseigenschaften; Jubiläum der VEDAG-Köln, 1986). APP-Bitumen-Bahnen kommen daher ausschließlich als Schweißbahnen in den Handel (Prospekt Homo-Plast Gesellschaft für homogene Isolier- und Abdichtungstechnik mbH). Die Bahnen sind häufig beidseitig mit Kunststoff-Folien kaschiert oder auf einer Seite mit einer mineralischen Abstreuung versehen.

Um die Migration zu verhindern, wurde die Verwendung von IPP (Isotaktischem Polypropylen) als Modifizierungsmittel für bituminöse Deckmassen vorgeschlagen. Im heißen Zustand neigen diese Massen jedoch zur Entmischung. Auch bei sehr rascher Abkühlung wird eine sehr grobe Struktur erhalten, die einem Bitumen-Füllstoff-System entspricht und die die Bitumeneigenschaften kaum verändert.

Da die Migration auch beim Verschweißen von Bahnen mit Deckmassen aus polyolefinmodifiziertem Bitumen mit solchen aus oxidiertem Bitumen auftreten kann, wird in der EP-A-0 196 365 vorgeschlagen, der mit amorphen Polyolefinen modifizierten bituminösen Deckmasse, die ggf. auch APP und IPP enthalten kann, 3 bis 5 Gew.-% eines speziellen EPDM zuzumischen. Beim Verschweißen werden beide Schichten aufgeschmolzen, so daß sich die Deckmassen aus Polymerbitumen und die aus oxidiertem Bitumen beim Einrollen miteinander vermischen. Durch diese neue Zwischenschicht wird eine dauerhafte Verklebung erreicht. Beim Verkleben mit oxidiertem Heißbitumen findet jedoch kein Vermischen mit der Deckmasse aus Polymerbitumen statt, so daß auch die Migration nicht ausreichend verhindert wird.

Es bestand daher die Aufgabe, Dichtungsbahnen der vorstehenden Art mit polypropylenmodifizierten bituminösen Deckmassen zu entwickeln, die sowohl mit heißem Klebebitumen als auch mit bituminösen Kaltselbstklebemassen verträglich sind.

Die Aufgabe wird erfindungsgemäß durch eine Dichtungsbahn gelöst, bei der zumindest eine Deckschicht aus einem Gemisch aus Bitumen mit einer Penetration zwischen 70 und 420•1/10 mm und einem Erweichungspunkt (R.u.K) zwischen 20 und 50 °C, 10 bis 30 Gew.-% eines Homo- oder/und Copolymeren auf der Basis von APP, 5 bis 20 Gew.-% IPP, vorzugsweise mit einem Schmelzindex zwischen 20 und 40, und gegebenenfalls weiterer üblicher Modifizierungsmittel besteht, wobei die nach außen weisenden freien Oberflächen dieser Schicht kristallines Polypropylen in Form von Sphärolithen enthalten und weder eine mineralische Abstreuung noch eine Folienkaschierung aufweisen.

Die Dichtungsbahn kann eine trägerlose Folie sein, die vollflächig mit Klebebitumen oder auch mit handelsüblichen bituminösen Kaltklebern verklebbar ist. In einer besonderen Ausführung ist die erfindungsgemäße trägerlose Dichtungsbahn einseitig mit einer bituminösen Kaltselbstklebeschicht versehen, die mit einer abziehbaren Trennfolie oder einem silikonisierten Papier kaschiert ist.

Die Dichtungsbahn kann aber auch eine übliche Verstärkungseinlage, wie beispielsweise ein aus organischen oder anorganischen Fasern bestehendes Vlies, Gewebe, Gitter, Gelege oder Gestrick, enthalten. Die Unterseite der Bahn kann mit einer Kaltklebeschicht versehen sein, die mit einer abziehbaren Trennfolie oder einem silikonisierten Papier kaschiert ist. Auf diese Weise wird eine kaltselbstklebende bituminöse Dachbahn erhalten.

Kaltselbstklebende Dachbahnen sind an sich bekannt. Sie sind meist entweder - mit Ausnahme ihrer Ränder - mit mineralischen Stoffen abgestreut, was ihre Herstellung erschwert, oder sie sind oberseitig mit einer klebefreudigen Kunststoff-Folie kaschiert, um das Verkleben der Ränder auf der Baustelle ohne zusätzliche Kaltklebemassen zu ermöglichen. Bei der erfindungsgemäßen Dichtungsbahn ist weder eine Kaschierung noch eine Abstreuung erforderlich. Überraschenderweise hat es sich gezeigt, daß bei der erfindungsgemäßen Bahn nicht nur kein Ausschwitzen an der Oberfläche bei der Lagerung oder nach dem Verlegen stattfindet, sondern auch eine gegen Lösungsmittel unempfindlichere Oberfläche erhalten wird. Die mit bituminösen Kaltselbstklebern verklebten mit 8 cm Überdeckung verlegten Bahnen zeigen auch nach längerer Lagerung bei 70 °C keine Schwächung der Längs- und Stoßnähte.

Als Copolymer auf der Basis von APP wird insbesondere ein Ethylen-Propylen-Copolymer verwendet. Andere, die Kälteflexibilität verbessernde Copolymerisate sind ebenfalls verwendbar.

Als Modifizierungsmittel können neben üblichen Füllstoffen Weichmacher, Elastomere, EPDM oder auch Harze in einer Menge von bis zu 15 Gew.-% des polypropylenmodifizierten Bitumens zugegeben werden.

Da einerseits je nach Fertigungsverfahren der erfindungsgemäßen Dichtungsbahn, z. B. auf einer üblichen Dachbahnen- oder Foliengießanlage, bestimmte maximale Viskositäten der bituminösen Massen vorgegeben sind, andererseits aber die relativ hohen Polymerzusätze zu einem erheblichen Anstieg der Viskosität führen, wird als Bitumenkomponente vorzugsweise ein weiches Bitumen, z. B. B 200 bis B 400, verwendet. Härtere Bitumentypen sind ebenfalls denkbar, wenn ein Plastifizierungsmittel, wie Harze oder Öle, zugegeben oder eine andere Verarbeitungstechnik angewandt wird, die höhere Viskositäten gestattet.

Da die erfindungsgemäße Bahn mit Klebebitumen verträglich ist, kann die, als Schweißbahn, auf der Unterseite auch mit verblasenem Bitumen beschichtet sein, das mit Talkum bepudert oder mit einer Folie kaschiert sein kann. Dadurch lassen sich preisgünstigere Bahnen herstellen, da auf den Polymerzusatz in der Schweißschicht verzichtet werden kann.

Beispiel

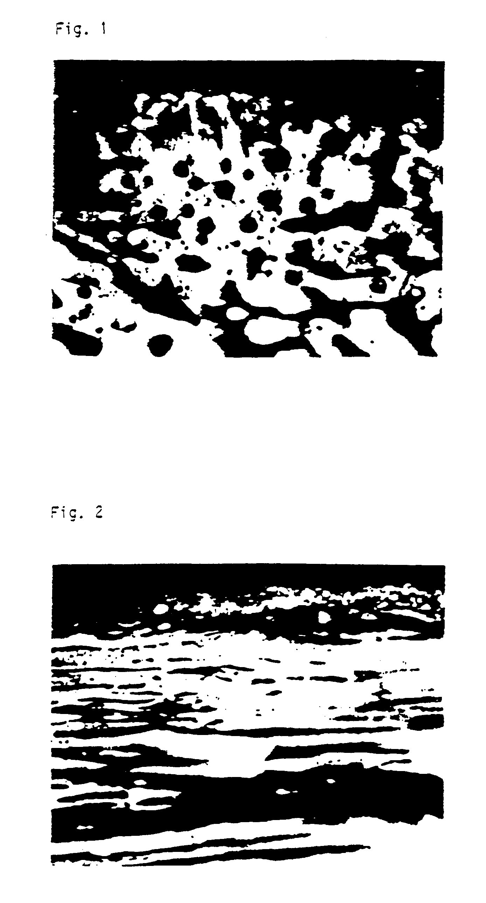

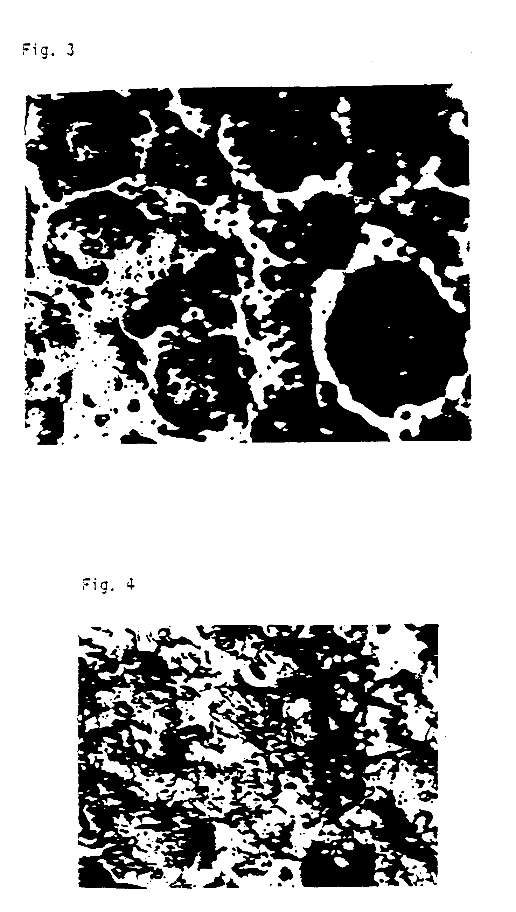

Die fluoreszensmikroskopische Aufnahme eines Querschnittes durch eine erfindungsgemäße Bahn Zeigt Fig. 1. Als Vergleich dazu zeigt Fig. 2 einen Schnitt durch eine Bahn mit einer Deckschicht der gleichen Stoffrezeptur, die jedoch mit einem höheren Temperaturgradienten von 300 K/min abgekühlt worden ist.

In der Fig. 1 ist das Bitumen netzartig von dem Polymerbitumen umgeben. Dadurch wird die Wanderung der niedermolekularen Bestandteile an die Oberfläche verhindert. Fig. 2 hingegen zeigt eine Schichtstruktur, bei der Bitumen- und Polymerbitumenschichten wechseln. Da die Schichten miteinander in Verbindung stehen, kann es infolge von Witterungseinflüssen zu einer schnelleren Ölausschwitzung an der Oberfläche kommen.

Die Bahn wird wie folgt hergestellt:
65 Gew.-% Bitumen B 200 werden bei 200 °C im Rührkessel mit 23 Gew.-% eines Gemisches auf der Basis von APP, das 70 Gew.-% Ethylen enthält, und
12 Gew.-% IPP mit einem Schmelzindex von 22 gemischt. Das Gemisch wird in einer Zahnscheibenmühle mit einem Spalt von 0,1 mm homogenisiert. Die fertige Masse wird in einer Dachbahnenanlage in einer Schichtdecke von 2 mm auf die Oberseite eines imprägnierten Polyesterfaservlieses mit einem Flächengewicht von 250 g/m² aufgetragen und mit einer Abkühlgeschwindigkeit von 100 K/min von 180 auf 40 °C abgekühlt. Die Unterseite des Vlieses wird mit einer 1 mm dicken Schicht eines bituminösen Kaltselbstklebers auf der Schmelze bestrichen und mit einem siliconisierten Papier abgedeckt. Die Bahn zeigt auch nach einmonatiger Lagerung bei 70 °C eine trockene matte Oberfläche ohne Ölausschwitzen. Zwei 10 cm breite Streifen der Bahn werden mit einer Überdeckung von 8 mm miteinander verklebt. Die Klebestelle hat nach 30 min eine Schälfestigkeit von 7,5 N/cm. Der Versuch wird wiederholt, nachdem die Streifen 10 Tage, bzw. drei Monate bei 70 °C im Trockenschrank aufbewahrt wurden. Danach hat die Klebestelle ein Schälfestigkeit von 11,3, bzw. 14,9 N/cm. Der Vergleich der Zahlenwerte zeigt deutlich, daß keine Schwächung der Klebenaht durch ausgewanderte Öle aufgetreten ist. Die Festigkeit hat vielmehr durch Diffusion der im Kaltselbstkleber vorhandenen Komponenten zugenommen.

Die Klebestelle der Vergleichsbahn mit einer oberen Deckschicht aus mit APP modifizierten Bitumen nach dem Stand der Technik, aber sonst gleichem Aufbau, hat nach 30 min eine Schälfestigkeit von nur 0,8 N/cm, und nach 10 Tagen, bzw. drei Monaten bei 70 °C eine Schälfestigkeit von gleichbleibend 1,0 N/cm. Die niedrigen Werte sind einerseits durch die spezifische Oberflächenausbildung und andererseits durch die Ausschwitzung von niedermolekularen Bestandteilen auf der Polymerbitumen-Oberfläche zu erklären. Die geringe Festigkeitszunahme ist durch die verbesserte Haftung durch das Erwärmen bedingt, die allerdings größtenteils durch das Ausschwitzen in die Grenzflächen aufgehoben wird.

Das Mischen der Komponenten der Deckmasse erfolgt im Temperaturbereich zwischen 160 und 220 °C. Zur Homogenisierung wird die Schmelze dann z. B. in einer Mühle mit hohem Schergefälle nachbehandelt.

Die Masse wird bei 180 bis 200 °C zu einer Folie gegossen oder auf einen Träger aufgestrichen und mit einer Abkühlgeschwindigkeit von maximal 120 K/min, vorzugsweise 60 bis 80 K/min, abgekühlt. Die Homogenisierung und die Abkühlgeschwindigkeit sind dabei ausschlaggebend für die Ausbildung der kristallinen Struktur der Bahn.

Das zeigt auch der Vergleich der Weitfeldfoto-Mikroskopaufnahme. Die Oberflächen zweier Bahnen mit der erfindungsgemäßen Deckmasse wie im Beispiel wurden von 180 °C mit einem Temperaturgradienten von 100 K/min (Fig. 3), bzw. von 240 K/min (Fig. 4) abgekühlt, mit Schwefelsäure angeätzt und unter dem Mikroskop mit 950-facher Vergrößerung mit Interferenz-Phasen-Kontrast-Technik untersucht.

Die Aufnahmen zeigen deutlich, daß das Polymer (dunkle Flächen) durch die langsamere Abkühlung in Sphärolithen mit einem Durchmesser bis zu 30 µm auskristallisieren. Diese Sphärolithe bewirken eine Oberflächenrauhigkeit, die die Haftung des Klebers verbessert, und verhindern das Ausschwitzen des Gemisches. Bei einer raschen Abkühlung können sich keine Sphärolithe ausbilden. Durch die gleichmäßige Verteilung von Bitumen (helle Flächen) und Polymer entsteht eine glatte Oberfläche mit geringerer Haftung des Klebers.

## Patentansprüche

1. Dichtungsbahn aus APP, IPP und gegebenenfalls weitere Modifizierungsmittel enthaltendem Bitumen, **dadurch gekennzeichnet, daß** zumindest eine Deckschicht aus einem Gemisch aus Bitumen mit einer Penetration zwischen 70 bis 420·1/10 mm und einem Erweichungspunkt (R.u.K) zwischen 20 und 50 °C, 10 bis 30 Gew.-% eines Homo- und/oder Copolymeren auf der Basis von APP, 5 bis 20 Gew.-% IPP, vorzugsweise mit einem Schmelzindex zwischen 20 und 40, und gegebenenfalls weiterer üblicher Modifizierungsmittel besteht, wobei die nach außen weisenden freien Oberflächen dieser Schicht kristallines Polypropylen in Form von Sphärolithen enthalten und weder eine mineralische Abstreuung noch eine Folienkaschierung aufweisen.

2. Dichtungsbahn nach Anspruch 1, **dadurch gekennzeichnet, daß** sie eine trägerlose Folie ist.

3. Dichtungsbahn nach Anspruch 2, **dadurch gekennzeichnet, daß** sie unterseitig mit einer bituminösen Kaltselbstklebeschicht versehen ist, die mit einer Trennfolie kaschiert ist.

4. Dichtungsbahn nach Anspruch 1, **dadurch gekennzeichnet, daß** sie eine Verstärkungseinlage enthält.

5. Dichtungsbahn nach Anspruch 4, **dadurch gekennzeichnet, daß** sie unterseitig mit einer Kaltselbstklebeschicht oder einer Schweißschicht versehen ist.

6. Verfahren zur Herstellung der Dichtungsbahn nach den Ansprüchen 1 bis 5 auf einer Foliengießanlage oder einer üblichen Dachbahnenanlage, **dadurch gekennzeichnet, daß** das Bitumen bei 160 bis 220 °C im Rührkessel mit den Polymeren gemischt wird, das Gemisch unter hohen Scherkräften homogenisiert wird, die fertige Masse bei einer Temperatur von 180 bis 200 °C zu einer Folie gegossen oder auf einen Träger als Deckschicht aufgetragen und mit einer Abkühlgeschwindigkeit von maximal 120 K/min gekühlt wird.

## Claims

1. A sealing web made of APP, IPP and optionally further bitumencontaining modifying agents, characterised in that at least one covering layer is made from a mixture of bitumen with a penetration of between 70 and 420·1/10 mm and a softening paint (ring and ball) of between 20 and 50 °C, 10 to 30 % by weight of a homopolymer and/or copolymer with an APP base, 5 to 20 % by weight IPP, preferably with a melt index between 20 and 40, and optionally further conventional modifying agent, the outwardly facing free surface of said layer comprising crystalline polypropylene in the form of nodules and neither comprising a mineral scattering nor a film lining.

2. A sealing web according to claim 1, characterised in that it is an unsupported film.

3. A sealing web according to claim 2, characterised in that it is provided on its underside with a bituminous cold self-adhesive layer which is lined with an insulating film.

4. A sealing web according to claim 1, characterised in that it contains a reinforcing inlay.

5. A sealing web according to claim 4, characterised in that it is provided on the underside with a cold self-adhesive layer or a welding layer.

6. A method for manufacturing the sealing web according to claims 1 to 5 on a film casting machine or a conventional overhead web machine, characterised in that the bitumen is mixed with the polymers in an agitator vessel at 160 to 220°C, the mixture is homogenised under high shearing forces, the finished mass is cast at a temperature of 180 to 200°C to form a film or is applied as a covering layer onto a support and is cooled with a maximum cooling rate of 120 K/min.

**Revendications**

1. Bande d'étanchéité en bitume contenant de l'APP, de l'IPP et, éventuellement d'autres agents modificateurs, caractérisée en ce qu'au moins une couche de revêtement est constituée par un mélange de bitume ayant une pénétration entre 70 et 420°1/20 mm et un point de ramollissement (anneau et bille) entre 20 et 50°C, de 10 à 30% en poids d'un homo- et/ou d'un copolymère à base d'APP, de 5 à 20% en poids d'IPP ayant de préférence un indice de fluidité entre 20 et 40 et, éventuellement d'autres agents modificateurs usuels, les surfaces libres de cette couche tournées vers l'extérieur contenant du polypropylène cristallin sous forme de sphérolithes et ne comportant ni saupoudrage minéral, ni contrecollage de feuille.

2. Bande d'étanchéité selon la revendication 1, caractérisée en ce qu'elle est une feuille sans support.

3. Bande d'étanchéité selon la revendication 2, caractérisée en ce qu'elle est munie, sur sa face inférieure, d'une couche autocollante bitumineuse à froid qui est doublée d'une feuille de séparation.

4. Bande d'étanchéité selon la revendication 1, caractérisée en ce qu'elle contient un élément de renfort.

5. Bande d'étanchéité selon la revendication 4, caractérisée en ce qu'elle est munie, sur sa face inférieure, d'une couche autocollante à froid ou d'une couche soudable.

6. Procédé de fabrication de la bande d'étanchéité selon les revendications 1 à 5 sur une installation de coulée de feuilles ou sur une installation pour panneaux de toiture courante, caractérisé en ce que le bitume est mélangé dans la cuve à agitation avec les polymères entre 160 et 220°C, que le mélange est homogénéisé sous l'effet de forces de cisaillement élevées, que le produit fini est coulé en une feuille à une température de 180 à 200°C ou est appliqué sur un support en tant que couche de surface et est refroidi avec une vitesse de refroidissement de 120 K/min. au maximum.

Fig. 1

Fig. 2

Fig. 3

Fig. 4